# EUROPEAN PATENT APPLICATION

(11) **EP 3 282 681 A1**
(43) Date of publication of application: **14.02.2018**
(21) Application number: 17185891.3
(22) Date of filing: 11.08.2017
(51) Int. Cl.: H04M 1/725, G08B 21/02, G08B 25/01, G08B 25/10, H04B 1/3827

(54) **METHOD AND DEVICE FOR ALARMING WITH TERMINAL, AND STORAGE MEDIUM**

(30) Priority: 11.08.2016 CN 201610659081
(71) Applicant: Beijing Xiaomi Mobile Software Co., Ltd., Beijing 100085 (CN)
(72) Inventor: XIE, Yan, Beijing, Beijing 100085 (CN); CHU, Yueyue, Beijing, Beijing 100085 (CN); CHENG, Yue, Beijing, Beijing 100085 (CN)
(74) Representative: dompatent von Kreisler Selting Werner - Partnerschaft von Patent- und Rechtsanwälten mbB

(57) **Abstract**

A method and a device for alarming with a terminal, and a storage medium are provided. According to an example of the method, upon acquiring current parameter information of the terminal, it is possible to determine whether the parameter information satisfies a preset condition or not. When the preset condition is satisfied, alarm information may be output.

## Description

### TECHNICAL FIELD

The present disclosure relates to a method and device for alarming with a terminal, and a storage medium.

### BACKGROUND

Terminals such as mobile phones, walkie-talkies and the like not only have a communication function, but also have other functions, for example, surfing an internet, which may bring convenience for users. However, as a commonly used device that a user carries around, the device may not be able to find that the user has an accident in time, so that it cannot effectively provide personal safety service for the user.

### SUMMARY

The present disclosure provides a method and a device for alarming with a terminal as well as a non-transitory machine-readable storage medium thereof.

According to a first aspect of examples of the present disclosure, there is provided a method for alarming with a terminal, and the method includes: acquiring current parameter information of the terminal; determining whether the parameter information satisfies a preset condition or not; and outputting alarm information if the preset condition is satisfied.

According to a second aspect of examples of the present disclosure, there is provided a device for alarming with a terminal, including a processor and a machine-readable storage medium, wherein by reading machine-executable instructions corresponding to an alarming logic stored on the machine-readable storage medium, the processor is caused to: acquire current parameter information of the terminal; determine whether the parameter information satisfies a preset condition or not; and output alarm information if the preset condition is satisfied.

According to a third aspect of examples of the present disclosure, there is provided a non-transitory machine-readable storage medium storing machine-executable instructions executable by one or more processors, the machine-executable instructions cause the one or more processors to perform operations comprising: acquiring current parameter information of the terminal; determining whether the parameter information satisfies a preset condition or not; and outputting alarm information if the preset condition is satisfied.

It shall be understood that both the foregoing general description and the following detailed description are merely exemplary and illustrative, rather than limit the present disclosure.

The details of one or more embodiments of the subject matter described in the present disclosure are set forth in the accompanying drawings and description below. Other features, aspects, and advantages of the subject matter will become apparent from the description, the drawings, and the claims. Features of the present disclosure are illustrated by way of example and not limited in the following figures, in which like numerals indicate like elements.

### BRIEF DESCRIPTION OF DRAWINGS

The accompanying drawings, which are incorporated in and constitute a part of the specification, illustrate examples coincident with the present disclosure and serve to explain the principles of the present disclosure together with the specification.
FIG. 1 is a flow chart of a method of alarming with a terminal according to an exemplary example of the present disclosure.
FIG. 2 is a flow chart of a method of alarming with a terminal according to another exemplary example of the present disclosure.
FIG. 3 is a flow chart of a method of alarming with a terminal according to yet another exemplary example of the present disclosure.
FIG. 4 is a flow chart of a method of alarming with a terminal according to still another exemplary example of the present disclosure.
FIG. 5 schematically illustrates an application scenario of a method of alarming with a terminal according to an exemplary example of the present disclosure.
FIG. 6 is a functional block diagram of according to an exemplary example of the present disclosure.
FIG. 7 is a functional block diagram of an alarming logic according to another exemplary example of the present disclosure.
FIG. 8 is a functional block diagram of an alarming logic according to yet another exemplary example of the present disclosure.
FIG. 9 is a functional block diagram of an alarming logic according to still another exemplary example of the present disclosure.
FIG. 10 is a functional block diagram of an alarming logic according to still another exemplary example of the present disclosure.
FIG. 11 is a functional block diagram of an alarming logic according to still another exemplary example of the present disclosure.
FIG. 12 is a functional block diagram of an alarming logic according to still another exemplary example of the present disclosure.
FIG. 13 is a functional block diagram of an alarming logic according to still another exemplary example of the present disclosure.
FIG. 14 is a functional block diagram of an alarming logic according to still another exemplary example of the present disclosure.
FIG. 15 schematically illustrates a hardware structure of a device for alarming with a terminal according to an exemplary example of the present disclosure.

### DETAILED DESCRIPTION

Exemplary examples will be described in detail herein, examples of which are shown in the accompanying drawings. When the following description refers to the accompanying drawings, the same numerals in different drawings denote the same or similar elements unless otherwise indicated. The embodiments described in the following exemplary examples are not representative of all embodiments coincident with the present disclosure. In contrast, they are merely examples of devices and methods coincident with some aspects of the present disclosure as detailed in the appended claims.

The term used in the present disclosure is for the purpose of describing particular examples only, and is not intended to be limiting of the present disclosure. The singular forms such as "a", 'said", and "the" used in the present disclosure and the appended claims are also intended to include multiple, unless the context clearly indicates otherwise. It is also to be understood that the term "and/or" as used herein refers to any or all possible combinations that include one or more associated listed items.

It is to be understood that although different information may be described using the terms such as first, second, third, etc. in the present disclosure, these information should not be limited to these terms. These terms are used only to distinguish the same type of information from each other. For example, the first information may also be referred to as the second information without departing from the scope of the present disclosure, and similarly, the second information may also be referred to as the first information. Depending on the context, in addition, the used word "if" may be interpreted as "when" or "as" or "in response to".

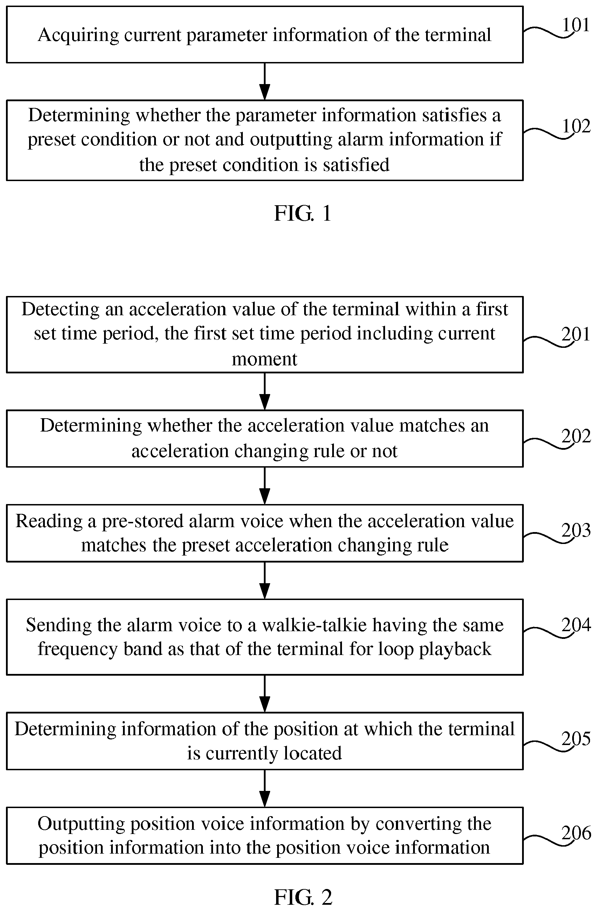

As shown in FIG. 1, it is a flow chart of a method of alarming with a terminal according to an example of the present disclosure. The method may be applied in a terminal. The terminal in the present disclosure may be any terminals capable of being used outdoors. For example, the terminal may include a mobile phone, a tablet, a Personal Digital Assistant (PDA) or a walkie-talkie. Here the terminal may have a function of surfing an internet, access a router through a wireless local area network and access a server on public network through the router. The method of alarming with a terminal may include the following blocks 101-102.

At block 101, current parameter information of the terminal may be acquired.

The parameter information in examples of the present disclosure may include acceleration information and humidity information. Accordingly, an acceleration sensor and a humidity sensor may be configured on the terminal for detecting the acceleration information and the humidity information, respectively.

At block 102, it may be determined whether the parameter information satisfies a preset condition; and alarm information may be output when the preset condition is satisfied.

Examples of the present disclosure is mainly directed to a case that a user who carries a terminal has an accident. A preset condition may be an acceleration changing rule when a user falls or drops and/or a humidity changing rule when a user is drowning.

In an example of the present disclosure, a terminal may detect acceleration information and/or humidity information and then determine whether the information satisfies the preset condition or not. If the preset condition is satisfied, it may be determined that a user has an accident and alarm information may be output. In this way, a situation in which the user using the terminal has an accident such as drowning, falling or the like may be detected timely and alarm information may be played timely, so that the user who has an accident may be noticed by others timely and rescued.

As shown in FIG. 2, it is a flow chart of a method of alarming with a terminal according to another example of the present disclosure. The method may be applied in a terminal and include the following blocks 201-206.

At block 201, an acceleration value of a terminal within a set time period may be detected, and the set time period includes the current moment.

In this block of the present disclosure, the terminal may detect the acceleration value within the set time period by using its acceleration sensor. For example, the time period includes the current moment and 5 minutes before the current moment.

At block 202, it may be determined whether the acceleration value matches a preset acceleration changing rule or not.

Examples of the present disclosure are mainly directed to an accidental situation in which the user using the terminal suddenly falls or drops. In this case, the acceleration value may be relatively large. For example, a velocity value may suddenly change and may become zero at the end of a set time period, e.g., the terminal is finally in a stationary state. Therefore, the acceleration changing rule may be set according to a velocity changing rule in this process. For example, the acceleration changing rule may be that an acceleration value in the set time period exceeds a set acceleration threshold value and the velocity value at the end of the set time period is zero.

At block 203, a pre-stored alarm voice may be read when the acceleration value matches the preset acceleration changing rule.

In an example of the present disclosure, the alarm voice may be pre-stored, such as, "I have a risk of dropping", "I need rescue" and so on.

At block 204, the alarm voice may be sent to a walkie-talkie having the same frequency band as that of the terminal for loop playback.

In an example of the present disclosure, the alarm voice may be sent to a walkie-talkie which currently uses the same frequency band as that of the terminal for loop playback. Meanwhile, when the terminal is a walkie-talkie, the terminal may play the alarm voice locally and set the volume to the maximum so that nearby users may hear the alarm information more easily.

At block 205, information of the position at which the terminal is currently located may be determined.

At the block 205 of the present disclosure, the current position of the terminal may be determined by positioning function. The positioning result may be latitude and longitude information or may be, such as, No. ** Road**, ** Park or the like.

At block 206, position voice information may be output by converting the position information into the position voice information.

In an example of the present disclosure, no matter whether the alarm voice is sent to a walkie-talkie of the same frequency band as that of the terminal or a designated terminal, for example, a terminal of a relative of the terminal user, the user of the walkie-talkie having the same frequency band or the user of the designated terminal may not be in the vicinity of the user who has an accident. Therefore, the accurate position of the user who has an accident should be known. The position information and the alarm voice may be sent together to the rescuer so that the rescuer may obtain more accurate information, quickly find the user who has an accident and provide rescue.

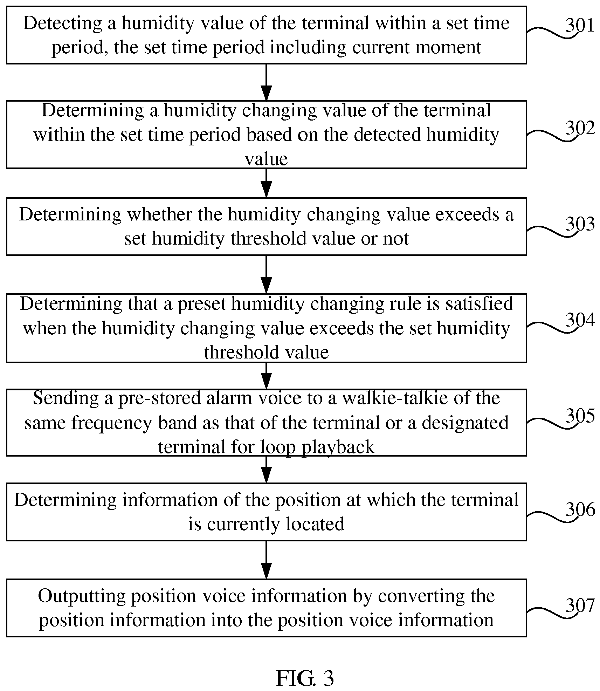

As shown in FIG. 3, it is a flow chart of a method of alarming with a terminal according to still another example of the present disclosure. The method may be applied in a terminal and include the following blocks 301-307.

At block 301, a humidity value of the terminal within a set time period may be detected, and the set time period includes current moment.

At the block 301 of the present disclosure, the humidity value within the set time period may be detected by a humidity sensor of the terminal. For example, the humidity value at the current moment and within 5 minutes before the current moment may be detected.

At block 302, a humidity changing value of the terminal within the set time period may be determined based on the detected humidity value.

Here the humidity changing value may be determined by subtracting the humidity values within the set time period.

At block 303, it may be determined whether the humidity changing value exceeds a set humidity threshold value or not.

In an example of the present disclosure, if the humidity changing value exceeds the set humidity threshold value, it may be determined that water has entered the terminal and the user of the terminal has a risk of drowning. In another example, if a humidity value exceeds the set humidity threshold value, it may be determined that water has entered the terminal.

At block 304, it may be determined that a preset humidity changing rule is satisfied when the humidity changing value exceeds the set humidity threshold value.

In an example of the present disclosure, an alarm voice may be pre-stored on the terminal, such as, "I have a risk of drowning", "I need rescue" and so on.

At block 305, a pre-stored alarm voice may be sent to a walkie-talkie of the same frequency band as that of the terminal or a designated terminal for loop playback.

In an example of the present disclosure, the terminal may also play the alarm voice locally and set the volume to the maximum so that the nearby users may hear the alarm information more easily.

At block 306, information of the position at which the terminal is currently located may be determined.

At block 306 of the present disclosure, the current position of the terminal may be determined by positioning function. The positioning result may be latitude and longitude information or may be, such as, No. ** Road**, ** Park or the like.

At block 307, position voice information may be output by converting the position information into the position voice information.

The block 307 of the present disclosure may refer to the description of block 207, and further description is omitted for brevity.

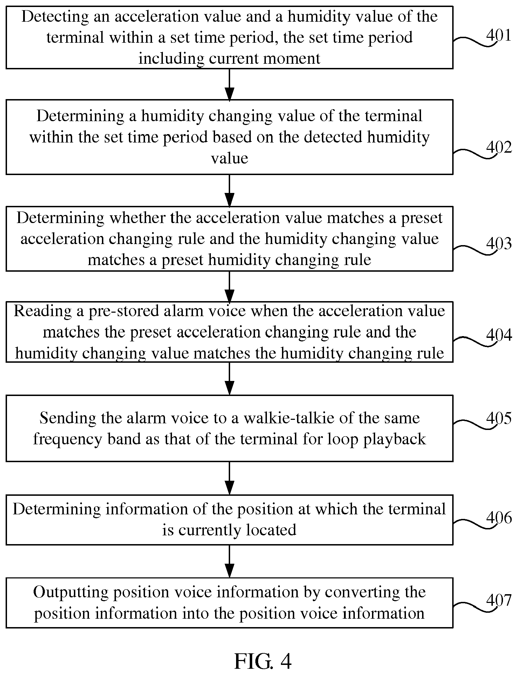

As shown in FIG. 4, it is a flow chart of a method of alarming with a terminal according to still another example of the present disclosure. The method may be used in a terminal and include the following blocks 401-407.

At block 401, an acceleration value and a humidity value of the terminal within a set time period may be detected, and the set time period includes current moment.

Combined with the examples shown in FIG. 2 and FIG. 3, it may be known that the terminal may detect the acceleration value within the set time period by using its acceleration sensor. For example, the time period includes current moment and 5 minutes before the current moment. The terminal may further detect the humidity value within the set time period by using its humidity sensor. For example, the time period includes current moment and 5 minutes before the current moment

At block 402, a humidity changing value of the terminal within the set time period may be determined based on the detected humidity value.

At block 403, it may be determined whether the acceleration value matches a preset acceleration changing rule and the humidity changing value matches a preset humidity changing rule.

Examples of the present disclosure are mainly directed to an accidental situation in which the user using the terminal suddenly falls and drops into water. In this case, the acceleration value may be relatively large. For example, the velocity value may suddenly change and may become zero at the end of the set time period, e.g., the terminal is finally in a stationary state. Therefore, the acceleration changing rule may be set according to a velocity changing rule in this process. For example, the acceleration changing rule may be that an acceleration value in the set time period exceeds a set acceleration threshold value and the velocity value at the end of the set time period is zero. In addition, since the user drops into water, the humidity value of the terminal may have a relatively great change, e.g., exceed a set humidity threshold value. In such a way, combined with the above two aspects, it may be determined whether the user falls into water or not.

At block 404, a pre-stored alarm voice is read when the acceleration value matches a preset acceleration changing rule and the humidity changing value matches a preset humidity changing rule.

In an example of the present disclosure, the pre-stored alarm voice may be read when an acceleration value matches acceleration changing rule and a humidity changing value matches a humidity changing rule, such as, "I have a risk of dropping", "I have a risk of drowning", "I need rescue" and so on.

At block 405, the alarm voice may be sent to a walkie-talkie of the same frequency band as that of the terminal for loop playback.

In an example of the present disclosure, the alarm voice may be sent to a walkie-talkie which currently uses the same frequency band as that of the terminal for loop playback. Meanwhile, when the terminal is a walkie-talkie, the terminal may play the alarm voice locally and set the volume to the maximum so that the nearby users may hear the alarm information more easily.

At block 406, information of the position at which the terminal is currently located may be determined.

At block 406 of the present disclosure, the current position of the terminal may be determined by positioning function. The positioning result may be latitude and longitude information or may be, such as, No. ** Road**, ** Park or the like.

At block 407, position voice information may be output by converting the position information into the position voice information.

In an example of the present disclosure, no matter whether the alarm voice is sent to a walkie-talkie of the same frequency band as that of the terminal or a designated terminal, for example, a terminal of a relative of the terminal user, the user of the walkie-talkie having the same frequency band or the user of the designated terminal may not be in the vicinity of the user who has an accident. Therefore, the accurate position of the user who has an accident should be known. The position information and the alarm voice may be sent together to the rescuer so that the rescuer may obtain more accurate information, quickly find the user who has an accident and provide rescue.

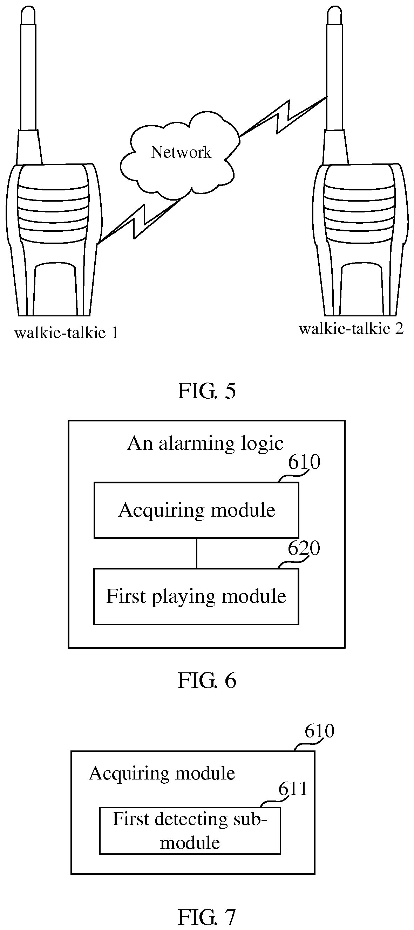

As shown in FIG. 5, it is a schematic diagram of an application scenario of a method of alarming with a terminal according to an example of the present disclosure. The scenario shown in FIG. 5 includes a walkie-talkie 1 as a terminal and a walkie-talkie 2 having the same frequency band as that of the walkie-talkie 1, where the walkie-talkie 1 may include an acceleration sensor.

The walkie-talkie 1 may detect an acceleration value within a set time period by the acceleration sensor and then determine whether the acceleration value matches a preset acceleration changing rule or not, where the acceleration changing rule may be that the acceleration value exceeds a set acceleration threshold value and the velocity value at the end of the set time period is zero. It may be determined that the user using the walkie-talkie 1 falls when the acceleration value matches the preset acceleration changing rule. A position at which the walkie-talkie 1 is located may be determined by GPS (Global Positioning System) function of the walkie-talkie to obtain position information. The position information may be converted into voice position information. An alarm voice pre-stored in the walkie-talkie 1 may be read. The voice position information and the alarm voice may be sent to the walkie-talkie 2. The walkie-talkie 2 may loop play the received voice position information and the alarm voice.

In the application scenario shown in FIG. 5, the specific process for realizing alarming with a terminal may refer to the above description for FIGs. 1-4, and further description is omitted for brevity.

Corresponding to examples of the above method of alarming with a terminal, the present disclosure further provides a terminal.

In an example of the present disclosure, the terminal may be a mobile phone having a routing function, a computer, a digital broadcasting terminal, a message receiving and sending device, game console, tablet equipment, medical equipment, fitness equipment, a personal digital assistant, and so on. An example of the terminal may be implemented by software, or may be implemented by hardware or by a combination of hardware and software. From a hardware level, the terminal may include at least a processor and a machine-readable storage medium.

In different examples, the machine-readable storage medium may be a Radom Access Memory (RAM), a volatile memory, a non-volatile memory, a flash memory, a storage drive (e.g., a hard disk drive), a solid state drive, any type of storage disks (such as a compact disc, a DVD, etc.), or a similar storage medium, or a combination thereof.

Further, machine executable instructions corresponding to an alarming logic may be stored on the machine-readable storage medium. As shown in FIG. 6, it is a functional block diagram of an alarming logic according to an exemplary example of the present disclosure. Divided by functions, the alarming logic may include an acquiring module 610 and a first playing module 620.

The acquiring module 610 may be configured to acquire current parameter information of a terminal.

The first playing module 620 may be configured to determine whether the parameter information satisfies a preset condition or not and output alarm information when the preset condition is satisfied.

In the above example, the terminal may detect the acceleration information and/or the humidity information and then determine whether the information satisfies the preset condition or not. If the preset condition is satisfied, it may be determined that the user of the terminal has an accident and the alarm information is output. In this way, an accidental situation in which the user using the terminal has a risk of drowning, falling or the like may be detected timely and the alarm informing is output, so that the user who has an accident may be noticed by others timely and rescued.

As shown in FIG. 7, it is a block diagram of an alarming logic according to another exemplary example of the present disclosure. The example shown in FIG. 7 is based on the example shown in FIG. 6 described above. The acquiring module 610 may include a first detecting sub-module 611.

The first detecting sub-module 611 may be configured to detect an acceleration value of the terminal within a set time period, and the set time period includes current moment.

In the above examples, the terminal may detect the acceleration value within the set time period by its acceleration sensor.

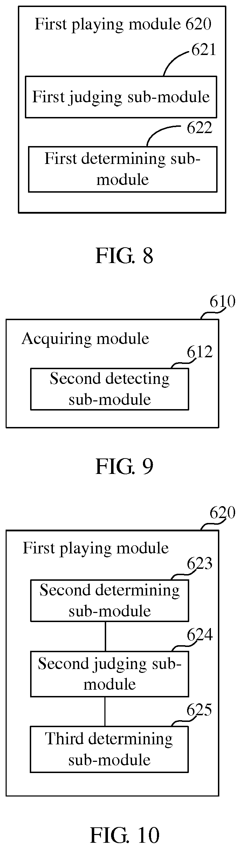

As shown in FIG. 8, it is a block diagram of an alarming logic according to still another exemplary example of the present disclosure. The example shown in FIG. 8 is based on the example shown in FIG. 7 described above. The first playing module 620 may include a first judging sub-module 621 and a first determining sub-module 622.

The first judging sub-module 621 may be configured to determine whether the detected acceleration value matches an acceleration changing rule or not.

The first determining sub-module 622 may be configured to determine that the preset condition is satisfied when the acceleration changing value matches the acceleration changing rule.

In the above examples, the terminal may determine that the user of the terminal has an accident such as falling, dropping or the like when the acceleration value matches the acceleration changing rule. The acceleration changing rule may be that the acceleration value exceeds a set acceleration threshold value and the velocity value at the end of the set time period is zero.

As shown in FIG. 9, it is a block diagram of an alarming logic according to still another exemplary example of the present disclosure. The example shown in FIG. 9 is based on the example shown in FIG. 6 described above. The acquiring module 610 may include a second detecting sub-module 612.

The second detecting sub-module 612 may be configured to detect a humidity value of the terminal within a set time period, and the set time period includes current moment.

In the above examples, the terminal may detect the humidity value within the set time period by its humidity sensor.

As shown in FIG. 10, it is a block diagram of an alarming logic according to still another exemplary example of the present disclosure. The example shown in FIG. 10 is based on the example shown in FIG. 9 described above. The first playing module 620 may include a second determining sub-module 623, a second judging sub-module 624 and a third determining sub-module 625.

The second determining sub-module 623 may be configured to determine a humidity changing value of the terminal within the set time period based on the humidity value.

The second judging sub-module 624 may be configured to determine whether the humidity changing value determined by the second determining sub-module 623 exceeds a set humidity threshold value or not.

The third determining sub-module 625 may be configured to determine that the preset humidity changing rule is satisfied when the second judging sub-module 624 determines that the humidity changing value exceeds the set humidity threshold value.

In the above examples, the terminal may acquire the humidity changing value based on the humidity value and determine whether water has entered the terminal with the humidity changing value. In this way, when the humidity changing value exceeds the set humidity threshold value, the terminal may determine that the user of the terminal has a risk of drowning.

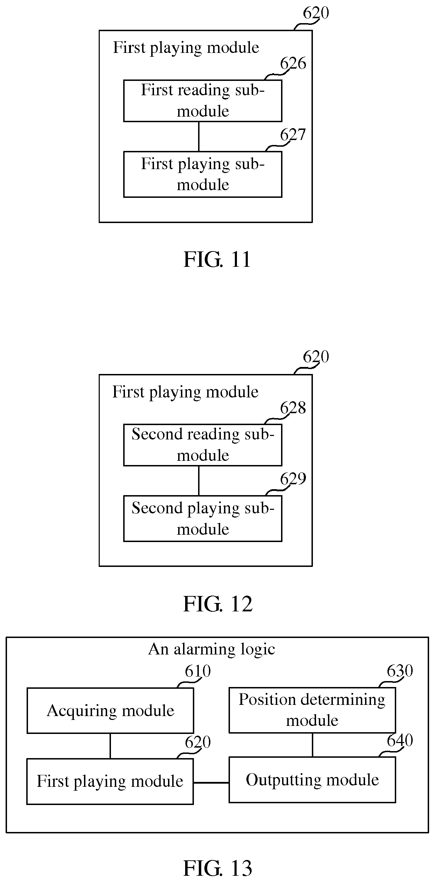

As shown in FIG. 11, it is a block diagram of an alarming logic according to still another exemplary example of the present disclosure. The example shown in FIG. 11 is based on the example shown in any of FIGs. 6 to 10 described above. The first playing module 620 may include a first reading sub-module 626 and a first playing sub-module 627.

The first reading sub-module 626 may be configured to read a pre-stored alarm voice.

The first playing sub-module 627 may be configured to send the alarm voice read by the first reading sub-module 626 to a designated terminal for loop playback.

In the above examples, the terminal may send the pre-stored alarm voice to the designated terminal for loop playback to remind other users that the user of the terminal has an accident. In this way, the user having an accident may be timely rescued to avoid a threat to life due to being in an accident state for a long time.

As shown in FIG. 12, it is a block diagram of an alarming logic according to still another exemplary example of the present disclosure. The example shown in FIG. 12 is based on the example shown in any of FIGs. 6 to 10 described above. When the terminal is a walkie-talkie, the first playing module 620 may include a second reading sub-module 628 and a second playing sub-module 629.

The second reading sub-module 628 may be configured to read a pre-stored alarm voice.

The second playing sub-module 629 may be configured to send the alarm voice read by the second reading sub-module 628 to a walkie-talkie having the same frequency band as that of the terminal for loop playback.

In the above examples, when the terminal is a walkie-talkie, the terminal may send the pre-stored alarm voice to a walkie-talkie having the same frequency band as that of the terminal for loop playback to remind other users that the user of the terminal has an accident. In this way, the user having an accident may be timely rescued to avoid a threat to life due to being in an accident state in a long time.

As shown in FIG. 13, it is a block diagram of an alarming logic according to still another exemplary example of the present disclosure. The example shown in FIG. 13 is based on the example shown in any of FIGs. 6 to 10 described above. The alarming logic may further include a position determining module 630 and an outputting module 640.

The position determining module 630 may be configured to determine information of the position at which the terminal is currently located.

The outputting module 640 may be configured to output position voice information by converting the position information into the position voice information.

In the above examples, the terminal may further determine the current position and convert the position information into voice position information, and send it together with the alarm voice to other terminals for playback. In this way, a rescuer may timely know an accurate position of the user having an accident and effectively rescue the user having an accident.

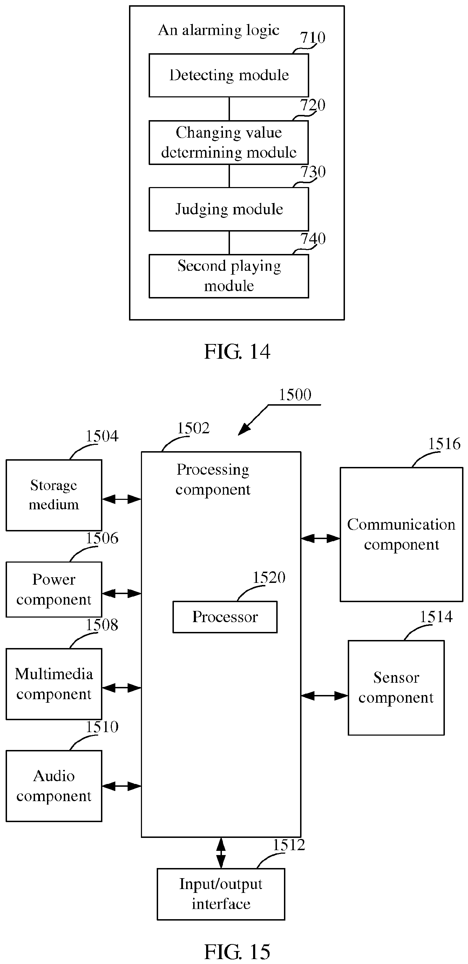

As shown in FIG. 14, it is a block diagram of an alarming logic according to still another exemplary example of the present disclosure. The alarming logic may include a detecting module 710, a changing value determining module 720, a judging module 730 and a second playing module 740.

The detecting module 710 may be configured to detect an acceleration value and a humidity value of the terminal within a set time period, where the set time period includes a current moment.

The changing value determining module 720 may be configured to determine a humidity changing value of the terminal within the set time period based on the detected humidity value.

The judging module 730 may be configured to determine whether the acceleration value matches the preset acceleration changing rule and the humidity changing value matches the preset humidity changing rule.

The second playing module 740 may be configured to output alarm information when the acceleration value matches the acceleration changing rule and the humidity changing value matches the humidity changing rule.

The implementation process of the functions and effects of each module in the above logic is described in detail in the implementation process of the corresponding blocks in the above method, and further description is omitted herein.

The example below may be implemented with software, which may further describe how the device for alarming with a terminal runs the alarming logic. For example, the alarming logic in the present disclosure should be understood as machine-executable instructions stored in a machine-readable storage medium. The processor on the device for alarming with a terminal in the present disclosure may perform the above method of alarming with a terminal by invoking the machine-executable instructions.

For the device example, since it corresponds substantially to the method example, the relevant parts may refer to the part of the method example. The device example described above is merely illustrative, where the modules described as the separate component may or may not be physically separate, and the component shown as a module may or may not be a physical unit, i.e., may be located in one place or may be distributed to a plurality of network elements. A part or all of the modules may be selected according to the actual needs to achieve the purpose of the solution of the present disclosure. Those skilled in the art will understand and practice it without making creative work.

As shown in FIG. 15, it illustrates a hardware structure diagram of a device 1500 for alarming with a terminal according to an exemplary example of the present disclosure. For example, the device 1500 may be a mobile phone having a routing function, a computer, a digital broadcasting terminal, a message receiving and sending equipment, a game console, tablet equipment, medical equipment, fitness equipment, a personal digital assistant, and so on.

Referring to FIG. 15, the device 1500 may include one or more of the following components: a processing component 1502, storage medium 1504, a power component 1506, a multimedia component 1508, an audio component 1510, an input/output (I/O) interface 1512, a sensor component 1514 and a communication component 1516.

The processing component 1502 generally controls overall operations of the device 1500, such as operations associated with display, phone calls, data communications, camera operations, and recording operations. The processing component 1502 may include one or more processors 1520 to execute instructions to perform all or part of the blocks of the above method. In addition, the processing component 1502 may include one or more modules which facilitate the interaction between the processing component 1502 and other components. For example, the processing component 1502 may include a multimedia module to facilitate the interaction between the multimedia component 1508 and the processing component 1502.

The storage medium 1504 may be configured to store various types of data to support the operation of the device 1500. Examples of such data include instructions for any application or method operated on the device 1500, contact data, phonebook data, messages, pictures, videos, and so on. The storage medium 1504 may be implemented by any type of volatile or non-volatile memory devices or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, a magnetic or optical disk.

The power component 1506 may provide power to various components of the device 1500. The power supply component 1506 may include a power management system, one or more power supplies, and other components associated with generating, managing, and distributing power for the device 1500.

The multimedia component 1508 may include a screen providing an output interface between the device 1500 and the user. In some examples, the screen may include a Liquid Crystal Display (LCD) and a Touch Panel (TP). If the screen includes the TP, the screen may be implemented as a touch screen to receive input signals from the user. The TP may include one or more touch sensors to sense touches, slips, and gestures on the TP. The touch sensors may not only sense a boundary of a touch or slip action, but also sense duration and a pressure associated with the touch or slip action. In some examples, the multimedia component 1508 may include a front camera and/or a rear camera. The front camera and/or rear camera may receive external multimedia data when the device 1500 is in an operating mode, such as a photographing mode or a video mode. Each of the front camera and rear camera may be a fixed optical lens system or have focus and optical zoom capability.

The audio component 1510 may be configured to output and/or input an audio signal. For example, the audio component 1510 may include a microphone (MIC) configured to receive an external audio signal when the device 1500 is in an operating mode, such as a call mode, a recording mode, and a voice recognition mode. The received audio signal may be further stored in the storage medium 1504 or transmitted via the communication component 1516. In some examples, the audio component 1510 further includes a speaker to output an audio signal.

The I/O interface 1512 may provide an interface between the processing component 1502 and peripheral interface modules. The above peripheral interface modules may include a keyboard, a click wheel, buttons, and so on. These buttons may include, but are not limited to, a home button, a volume button, a starting button, and a locking button.

The sensor component 1514 may include one or more sensors to provide status assessments of various aspects of the device 1500. For example, the sensor component 1514 may detect the on/off status of the device 1500, relative positioning of component, e.g., the component is a display and a keypad of the device 1500. The sensor component 1514 may also detect a change in position of the device 1500 or one component of the device 1500, a presence or absence of the contact between the user and the device 1500, an orientation or an acceleration/deceleration of the device 1500, and a change in temperature of the device 1500. The sensor component 1514 may include a proximity sensor configured to detect the presence of a nearby object without any physical contact. The sensor component 1514 may further include an optical sensor, such as a CMOS or CCD image sensor, for use in imaging applications. In some examples, the sensor component 1514 may further include an accelerometer sensor, a gyroscope sensor, a magnetic sensor, a pressure sensor, a microwave sensor, or a temperature sensor.

The communication component 1516 may be configured to facilitate communication, wired or wirelessly, between the device 1500 and other devices. The device 1500 may access a wireless network based on a communication standard, such as Wi-Fi, 2G or 3G, or a combination thereof. In an exemplary example, the communication component 1516 receives a broadcast signal or information associated broadcast externally from a broadcast management system via a broadcast channel. In one exemplary example, the communication component 1516 further includes a Near Field Communication (NFC) module to facilitate short-range communications. For example, the NFC module may be implemented based on a Radio Frequency Identification (RFID) technology, an Infrared Data Association (IrDA) technology, an Ultra Wideband (UWB) technology, a Bluetooth (BT) technology and other technologies.

In an exemplary examples, the device 1500 may be implemented with one or more Application Specific Integrated Circuits (ASICs), Digital Signal Processors (DSPs), Digital Signal Processing Devices (DSPDs), programmable Logic Devices (PLDs), Field Programmable Gate Arrays (FPGA), controllers, microcontrollers, microprocessors, or other electronic components for performing the above method.

In exemplary examples, there is also provided a non-transitory machine-readable storage medium including instructions, such as a storage medium 1504 including instructions. The above instructions may be executed by the processor 1520 of the device 1500 to perform the above method. For example, the non-transitory machine-readable storage medium may be a ROM, a Random Access Memory (RAM), a CD-ROM, a magnetic tape, a floppy disk, and an optical data storage device and the like.

Other implementations of the present disclosure will be apparent to those skilled in the art from consideration of the specification and practice of the present disclosure herein. The present disclosure is intended to cover any variations, uses, modification or adaptations of the present disclosure following the general principles thereof and including such departures from the present disclosure as come within known or customary practice in the art. It is intended that the specification and examples be considered as exemplary only, with a true scope of the present disclosure being indicated by the following claims.

The foregoing descriptions are merely preferred examples of the present disclosure, and are not intended to limit the present disclosure.

## Claims

1. A method for alarming with a terminal, comprising:
acquiring current parameter information of the terminal;
determining whether the parameter information satisfies a preset condition or not; and
outputting alarm information if the preset condition is satisfied.

2. The method according to claim 1, wherein acquiring the current parameter information of the terminal comprises:
detecting an acceleration value of the terminal within a first set time period, the first set time period including current moment.

3. The method according to claim 2, wherein determining whether the parameter information satisfies the preset condition comprises:
determining whether the acceleration value matches an acceleration changing rule or not, wherein the acceleration changing rule indicates that the acceleration value exceeds a set acceleration threshold value and a velocity value at the end of the first set time period is zero; and
determining that the preset condition is satisfied when the acceleration value matches the acceleration changing rule.

4. The method according to claim 1, wherein acquiring the current parameter information of the terminal comprises:
detecting a humidity value of the terminal within a second set time period, the second set time period including current moment.

5. The method according to claim 4, wherein determining whether the parameter information satisfies the preset condition comprises:
determining a humidity changing value of the terminal within the second set time period based on the humidity value; and
determining that the preset condition is satisfied when the humidity changing value exceeds a set humidity threshold value.

6. The method according to claim 1, wherein outputting alarm information comprises:
reading a pre-stored alarm voice; and
sending the alarm voice to a designated terminal for loop playback.

7. The method according to claim 6, wherein when the terminal is a walkie-talkie, the designated terminal is another walkie-talkie having the same frequency band as that of the terminal.

8. A device for alarming with a terminal, comprising:
a processor; and
a machine-readable storage medium to store machine-executable instructions corresponding to an alarming logic; wherein by reading and executing the machine-executable instructions, the processor is caused to:
acquire current parameter information of the terminal;
determine whether the parameter information satisfies a preset condition or not; and
output alarm information if the preset condition is satisfied.

9. The device according to claim 8, wherein when acquiring the current parameter information of the terminal, the machine-executable instructions cause the processor to:
detect an acceleration value of the terminal within a first set time period, the first set time period including current moment.

10. The device according to claim 9, wherein when determining whether the parameter information satisfies the preset condition or not, the machine-executable instructions cause the processor to:
determine whether the acceleration value matches an acceleration changing rule, wherein the acceleration changing rule indicates that the acceleration value exceeds a set acceleration threshold value and a velocity value at the end of the first set time period is zero; and
determine that the preset condition is satisfied when the acceleration changing value matches the acceleration changing rule.

11. The device according to claim 8, wherein when acquiring the current parameter information of the terminal, the machine-executable instructions cause the processor to:
detect a humidity value of the terminal within a second set time period, the second set time period including current moment.

12. The device according to claim 11, wherein when determining whether the parameter information satisfies the preset condition, the machine-executable instructions cause the processor to:
determine a humidity changing value of the terminal within the second set time period based on the humidity value; and
determine that the preset condition is satisfied when the humidity changing value exceeds a set humidity threshold value.

13. The device according to claim 8, wherein when outputting alarm information, the machine-executable instructions cause the processor to:
read a pre-stored alarm voice; and
send the alarm voice to a designated terminal for loop playback.

14. The device according to claim 13, wherein when the terminal is a walkie-talkie, the designated terminal is another walkie-talkie having the same frequency band as that of the terminal.

15. A non-transitory machine-readable storage medium storing machine-executable instructions executable by one or more processors, the machine-executable instructions cause the one or more processors to perform the method for alarming with a terminal described by claim 1.
